(19) Europäisches Patentamt
European Patent Office
Office européen des brevets

(11) **EP 4 506 222 A1**

(12) **EUROPEAN PATENT APPLICATION**
published in accordance with Art. 153(4) EPC

(43) Date of publication:
**12.02.2025   Bulletin 2025/07**

(21) Application number: **22936424.5**

(22) Date of filing: **08.04.2022**

(51) International Patent Classification (IPC):
***B60W 40/06*** (2012.01)

(52) Cooperative Patent Classification (CPC):
**B60W 40/06**

(86) International application number:
**PCT/IB2022/000194**

(87) International publication number:
**WO 2023/194761 (12.10.2023 Gazette 2023/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **NISSAN MOTOR CO., LTD.
Kanagawa 221-0023 (JP)**
• **Renault SAS
92100 Boulogne Billancourt (FR)**

(72) Inventors:
• IKEGAMI, Takashi
  Atsugi-shi, Kanagawa 243-0123 (JP)
• MATSUO, Haruo
  Atsugi-shi, Kanagawa 243-0123 (JP)
• NAGASE, Masanobu
  Atsugi-shi, Kanagawa 243--0123 (JP)

(74) Representative: **Grünecker Patent- und
Rechtsanwälte
PartG mbB
Leopoldstraße 4
80802 München (DE)**

(54) **INFORMATION PROCESSING METHOD AND INFORMATION PROCESSING DEVICE**

(57)    An information processing method and an information processing device generate a cluster made up of ranging points that are within a predetermined distance from each other, based on a point cloud data, detect a moving direction of the ranging point included in the cluster from a first timing to a second timing, set a height condition that a height of the ranging point included in the cluster from a road surface on which a vehicle is traveling is equal to or lower than a predetermined height at at least one of the first timing and the second timing, set an arrangement condition that a position of the ranging point included in the cluster projected onto the road surface are arranged along the moving direction at at least one of the timings, set a deviation condition that a difference between a first distance to the cluster at the first timing and a second distance to the cluster at the second timing is equal to or smaller than a predetermined value, and recognize the cluster as a curb on the road surface, in a case of determining that all of the primary conditions including the height condition, the arrangement condition, and the deviation condition, are satisfied.

FIG. 1

EP 4 506 222 A1

**Description**

TECHNICAL FIELD

The present invention relates to an information processing method and an information processing device.

BACKGROUND ART

A technology has been proposed that processes distance data (distance and direction) obtained by a scanning laser radar, and determines whether a moving object is a pedestrian or not based on the size and speed of the moving object recognized based on the distance data (Patent Literature 1).

CITATION LIST

PATENT LITERATURE

Patent Literature 1: Japanese Patent Laid-Open Publication No. 2006-160116

SUMMARY OF INVENTION

TECHNICAL PROBLEM

According to the technology described in Patent Literature 1, objects are discriminated only based on the size and speed of moving objects, so if the density of ranging points around the vehicle obtained by scanning using a sensor is not sufficient, stationary structures such as curbs may be mistaken for moving objects.
The present invention has been made in view of the above problems. An object of the present invention is to provide an information processing method and an information processing device that can reduce the possibility of misidentifying stationary structures such as curbs for moving objects even if the density of ranging points around the vehicle obtained by scanning using a sensor is not sufficient.

SOLUTION TO PROBLEM

In order to solve the above-described problems, an information processing method and an information processing device, according to an aspect of the present invention, generate a cluster made up of ranging points that are within a predetermined distance from each other, based on a point cloud data, detect a moving direction of the ranging point included in the cluster from a first timing to a second timing, set a height condition that a height of the ranging point included in the cluster from a road surface on which a vehicle is traveling is equal to or lower than a predetermined height at at least one of the first timing and the second timing, set an arrangement condition that a position of the ranging point included in the cluster projected onto the road surface are arranged along the moving direction at at least one of the timings, set a deviation condition that a difference between a first distance to the cluster at the first timing and a second distance to the cluster at the second timing is equal to or smaller than a predetermined value, and recognize the cluster as a curb on the road surface, in a case of determining that all of the primary conditions including the height condition, the arrangement condition, and the deviation condition, are satisfied.

ADVANTAGEOUS EFFECTS OF INVENTION

According to the present invention, it is possible to reduce the possibility of misidentifying stationary structures such as curbs for moving objects even if the density of ranging points around the vehicle obtained by scanning using a sensor is not sufficient.

BRIEF DESCRIPTION OF DRAWINGS

[Fig. 1] Fig. 1 is a block diagram illustrating a configuration of an information processing device 1 according to an embodiment of the present invention.
[Fig. 2] Fig. 2 is a flowchart illustrating a processing of the information processing device 1 according to the embodiment of the present invention.

[Fig. 3A] Fig. 3A is a schematic diagram showing the positional relationship between a ranging sensor 10 and a ranging point on a surface of a curb.

[Fig. 3B] Fig. 3B is a schematic diagram showing the relationship between the ranging points on the surface of the curb and clusters.

[Fig. 4A] Fig. 4A is a first plan view showing an example of the positional relationship between the curb and the ranging sensor 10.

[Fig. 4B] Fig. 4B is a second plan view showing an example of the positional relationship between the curb and the ranging sensor 10.

[Fig. 4C] Fig. 4C is a third plan view showing an example of the positional relationship between the curb and the ranging sensor 10.

DESCRIPTION OF EMBODIMENTS

Hereinafter, embodiments of the present invention will be described with reference to the drawings. In the description of the drawings, the same items are designated by the same reference numerals and duplicate description will be omitted.

[Configuration of information processing device]

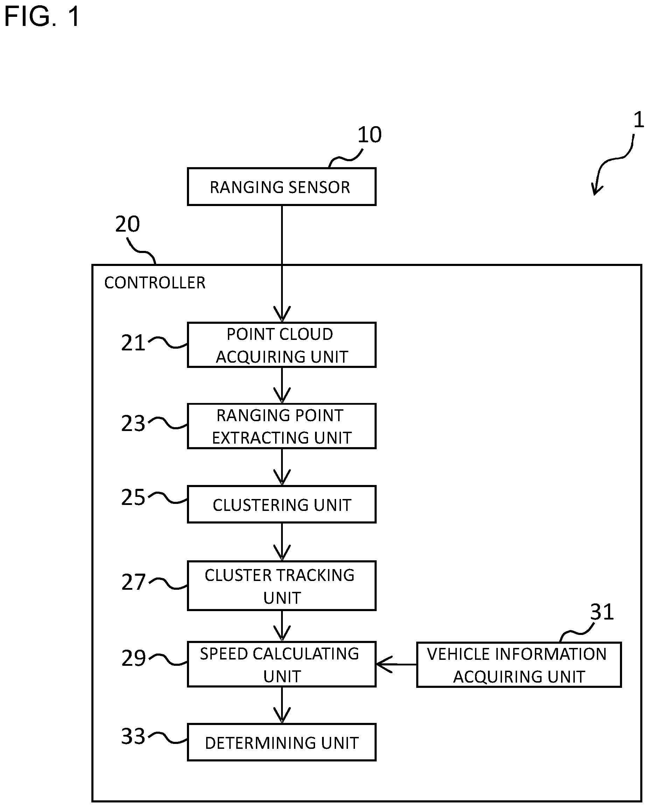

An example of the configuration of an information processing device 1 will be described with reference to Fig. 1. Fig. 1 is a block diagram illustrating a configuration of an information processing device 1 according to this embodiment. As shown in Fig. 1, the information processing device 1 includes a ranging sensor 10 (sensor), and a controller 20.

The information processing device 1 may be installed in a vehicle that has an automatic driving function, or may be installed in a vehicle that does not have an automatic driving function. Further, the information processing device 1 may be installed in a vehicle that can switch between automatic driving and manual driving. Furthermore, the automatic driving function may be a driving assistance function that automatically controls only some of the vehicle control functions, such as steering control, braking force control, and driving force control, to support the driver's driving. In this embodiment, the information processing device 1 will be described as being installed in a vehicle having an automatic driving function.

Although omitted in Fig. 1, the information processing device 1 may control various actuators such as a steering actuator, an accelerator pedal actuator, and a brake actuator based on the recognition results (position, shape, posture, etc. of an object) by the attribute information setting unit 24. This makes it possible to realize highly accurate automated driving.

The ranging sensor 10 includes a sensor that mainly measures the distance and direction to objects around the vehicle by emitting electromagnetic waves from an emission point around the vehicle and detecting the position of a reflection point based on the reflected waves of the emitted electromagnetic waves. An example of such a sensor is a lidar (LIDAR: Laser Imaging Detection and Ranging). The lidar is a sensor that emits light (laser light) from the emission point to a predetermined range around the vehicle, detects the position of the reflection point (ranging point) based on the reflected wave, and generates point cloud data regarding the ranging point. The lidar is a device that measures the distance and direction to an object and recognizes the shape of objects by emitting light (laser light) to objects around the vehicle and measuring the time it takes for the light (reflected light) to hit the object and bounce back. Furthermore, the lidar can also acquire three-dimensional positional relationships between objects. Note that it is also possible to perform mapping using the intensity of reflected light.

For example, the lidar scans the surroundings of the vehicle in the main scanning direction and the sub scanning direction by changing the direction of light irradiation. As a result, light is sequentially irradiated to a plurality of ranging points around the vehicle. A round of irradiation of light to all ranging points around the vehicle is repeated at predetermined time intervals. The lidar generates information for each ranging point (ranging point information) acquired by irradiating light. Then, the lidar outputs point cloud data consisting of a plurality of ranging point information to the controller 20.

The ranging point information includes position information of the ranging point. The position information is information indicating the position coordinates of the ranging point. A polar coordinate system may be used for the position coordinates, which is expressed by the direction from the lidar to the ranging point (yaw angle, pitch angle) and the distance (depth) from the lidar to the ranging point. For the position coordinates, a three-dimensional coordinate system expressed by x coordinate, y coordinate, and z coordinate with the origin at the installation position of the lidar may be used. Further, the ranging point information may include time information of the ranging point. The time information is information indicating the time when the position information of the ranging point was generated (the reflected electromagnetic wave was received). In addition, the ranging point information may include information on the intensity of reflected light from the ranging point (intensity information).

The controller 20 is a general-purpose microcomputer that includes a CPU (central processing unit), memory, and an input/output unit. A computer program for functioning as the information processing device 1 is installed in the microcomputer. By executing the computer program, the microcomputer functions as a plurality of information processing circuits included in the information processing device 1. The controller 20 processes data acquired from the ranging sensor 10.

Here, an example is shown in which a plurality of information processing circuits included in the information processing device 1 are realized by software. However, it is also possible to configure information processing circuits by preparing dedicated hardware for executing each of the following information processing. Further, a plurality of information processing circuits may be configured by individual hardware.

The controller 20 includes a point cloud acquiring unit 21, a ranging point extracting unit 23, a clustering unit 25, a cluster tracking unit 27, a speed calculating unit 29, a vehicle information acquiring unit 31, and a determining unit 33, as examples of a plurality of information processing circuits (information processing functions). Note that the controller 20 may be expressed as an ECU (Electronic Control Unit).

The point cloud acquiring unit 21 acquires point cloud data from the ranging sensor 10.

The ranging point extracting unit 23 extracts ranging points of three-dimensional objects existing around the vehicle, excluding ranging points on the road surface on which the vehicle travels, based on the point cloud data.

The clustering unit 25 classifies (clusters) a plurality of ranging points regarding the three-dimensional objects into a plurality of clusters based on the distance between each point. More specifically, the clustering unit 25 performs a process of classifying a set of ranging points whose distances to adjacent ranging points are less than or equal to a predetermined value as a cluster of ranging points related to one object. Therefore, each cluster is made up of ranging points that are within a predetermined distance from each other. Note that the predetermined distance may be set in advance, or may be set as appropriate based on the surrounding situation of the vehicle, the speed of the vehicle, and the like.

In addition, the clustering unit 25 may calculate the size of each cluster based on information on the ranging points within the cluster. Then, if the calculated size of cluster is within a preset range corresponding to the pre-registered target object, the clustering unit 25 may set the registered target object as a candidate for the cluster.

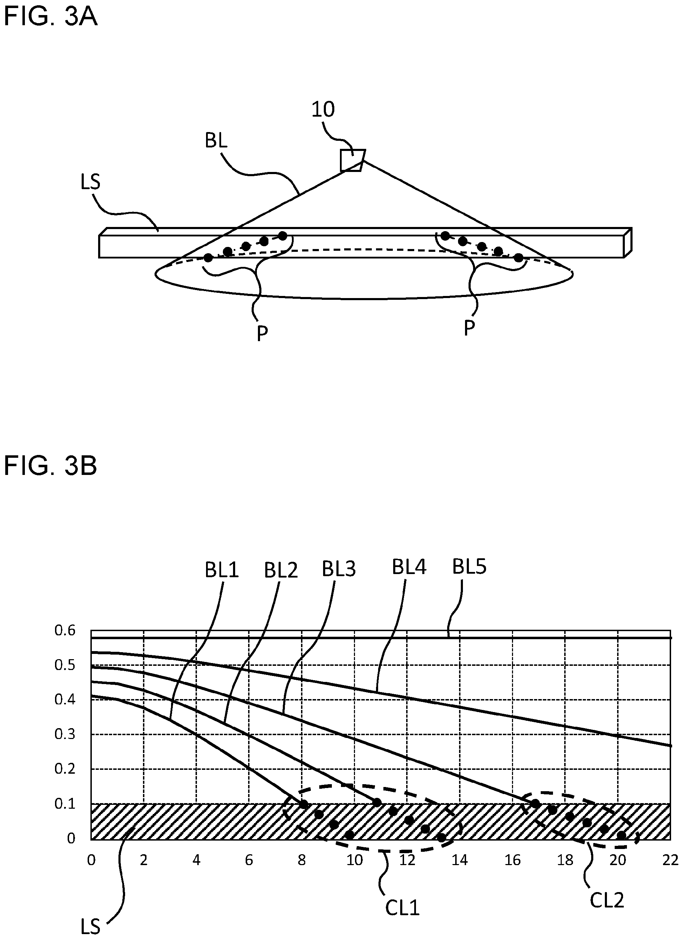

An aspect of clustering by the clustering unit 25 will be explained using Figs. 3A and 3B. Fig. 3A is a schematic diagram showing the positional relationship between a ranging sensor 10 and a ranging point on a surface of a curb. Fig. 3B is a schematic diagram showing the relationship between the ranging points on the surface of the curb and clusters.

In Fig. 3A, the area through which the electromagnetic waves emitted from the emission point of the ranging sensor 10 passes is expressed as a cone BL. The emission point of the ranging sensor 10 is located at the apex of the cone BL, and the emitted electromagnetic waves pass through the surface of the cone BL. Further, a plurality of ranging points P located at locations where the cone BL and the surface of the curb LS intersect are indicated by black dots.

In Fig. 3B, the intersection of the cones BL1 to BL5, which indicate the areas through which the electromagnetic waves emitted from the emission point of the ranging sensor 10 pass, and the plane including the side surface of the curb LS is indicated by a solid line (curved line). Furthermore, the ranging point corresponding to the curb LS is indicated by a black dot. Note that it is assumed that the side surface of the curb LS is perpendicular to the road surface on which the vehicle travels.

The electromagnetic waves indicated by the cones BL1 to BL5 have different pitch angles (vertical inclination angles with respect to the horizontal plane) when emitted from the emission point of the ranging sensor 10. The pitch angle in the propagating direction of the electromagnetic waves corresponding to the cone BL1 is the largest, and the pitch angle in the propagating direction of the electromagnetic waves corresponding to the cones becomes smaller in the order of cones BL2, BL3, BL4, and BL5.

In Fig. 3B, the ranging points belonging to cone BL1 and cone BL2 are classified as cluster CL1, and the ranging points belonging to cone BL3 are classified as cluster CL2, which is different from cluster CL1. The ranging points belonging to cluster CL1 and the ranging points belonging to cluster CL2 are both ranging points corresponding to the curb LS, so the ranging points belonging to cluster CL1 and the ranging points belonging to cluster CL1 should be classified into the same cluster, originally. However, when the curb LS is located far from the emission point of the ranging sensor 10 and the density of the ranging points at the position of the curb LS is not sufficient, a problem may occur in which ranging points for the same target object are classified into different clusters, as shown in Fig. 3B.

Furthermore, since the cluster CL1 and the cluster CL2 shown in Fig. 3B move along the curb LS with the movement of the vehicle, they appear to have movements similar to those of pedestrians or small animals. Thus, if an attempt is made to recognize target objects corresponding to clusters based only on the size and speed of the clusters, there is a risk that the cluster CL1 and the cluster CL2 may be mistakenly recognized as moving objects. Therefore, the cluster tracking unit 27 and the determining unit 33, which will be described later, perform processing to reduce the possibility of erroneously recognizing cluster CL1 and cluster CL2 as moving objects.

The cluster tracking unit 27 determines whether each cluster at two consecutive time points (first timing and second timing) belongs to the same object based on the clustering results (cluster position, shape, etc.) for the ranging points at both timings. For example, the cluster tracking unit 27 acquires the moving direction of the ranging points included in the cluster from the first timing to the second timing.

Furthermore, the cluster tracking unit 27 acquires the height of the ranging points included in the cluster. The cluster tracking unit 27 may calculate a representative value (for example, an average value) of the height of the ranging points based on a predetermined ratio or more of the ranging points included in the cluster, and may acquire the representative value as the height of the cluster.

Furthermore, the cluster tracking unit 27 acquires the arrangement direction of the ranging points included in the cluster. More specifically, the cluster tracking unit 27 calculates the positions of the ranging points included in the cluster projected onto the road surface, and acquires the arrangement directions on a two-dimensional plane parallel to the road surface for the plurality of positions acquired by projecting the plurality of the ranging points. The cluster tracking unit 27 may acquire the arrangement direction based on a predetermined ratio or more of the ranging points among the ranging points included in the cluster.

The cluster tracking unit 27 acquires the height of the ranging points and the arrangement direction of the ranging points at at least one of the first timing and the second timing.

In addition, the cluster tracking unit 27 acquires the distance from the emission point where electromagnetic waves are emitted to the ranging point to the cluster. Here, the cluster tracking unit 27 acquires the distance from the emission point to the cluster at the first timing as a first distance, and acquires the distance from the emission point to the cluster at the second timing as a second distance.

The cluster tracking unit 27 acquires, for each cluster, the height of the cluster, the arrangement direction in which the ranging points in the cluster are arranged, and the distance from the emission point to the cluster.

The vehicle information acquiring unit 31 acquires the position, speed, and moving direction of the vehicle. For example, the vehicle information acquiring unit 31 may acquire the vehicle position using the GPS receiver or the GNSS receiver (not shown), or may acquire the vehicle condition using a speed sensor, an acceleration sensor, a steering angle sensor, a gyro sensor, a brake oil pressure sensor, an accelerator opening sensor, etc.

The speed calculating unit 29 calculates, for each cluster, the expected moving speed when the cluster is a cluster consisting of ranging points corresponding to curb stones. The size W of the assumed moving speed of the cluster is calculated by the following equation (1).

[Equation 1]

$$W = V \cos \theta + V \sin \theta \tan(\theta + \phi) \qquad (1)$$

Here, V is the magnitude of the moving speed of the ranging sensor 10, $\theta$ is the angle between the moving direction of the ranging sensor 10 and the arrangement direction of the ranging points included in the cluster, and $\phi$ is the yaw angle (azimuth angle) of the cluster with respect to the ranging sensor 10. Note that the moving speed of the ranging sensor 10 is calculated based on the speed of the vehicle and the steering angle. Further, the yaw angle of the cluster is, for example, the average value of the yaw angles of the ranging points included in the cluster, or the yaw angle of the representative point of the cluster calculated based on the ranging points included in the cluster.

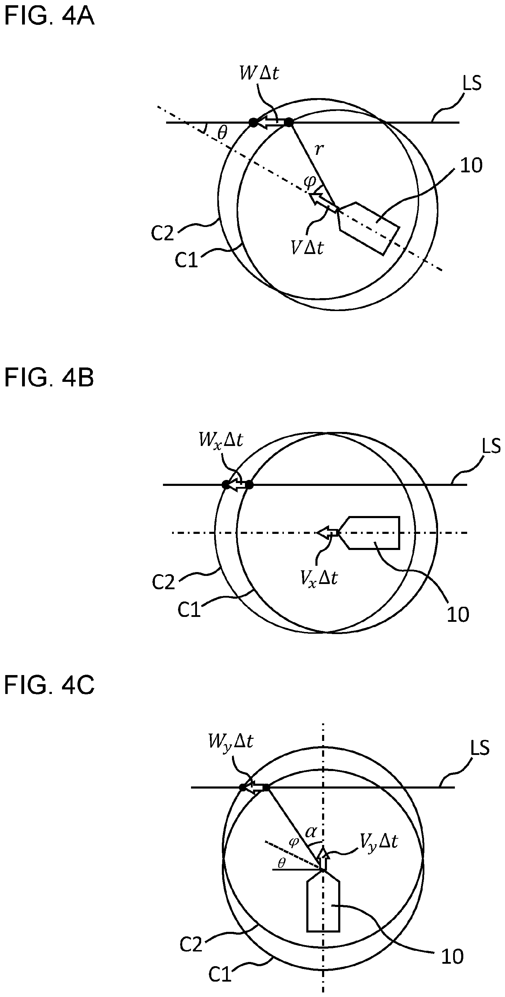

The reason why the magnitude of the moving speed of the cluster consisting of the ranging points corresponding to the curb is expressed by the above equation (1) will be explained using Figs. 4A, 4B, and 4C. Fig. 4A is a first plan view showing an example of the positional relationship between the curb and the ranging sensor 10. Fig. 4B is a second plan view showing an example of the positional relationship between the curb and the ranging sensor 10. Fig. 4C is a third plan view showing an example of the positional relationship between the curb and the ranging sensor 10.

In Fig. 4A, the distance traveled by the ranging sensor 10 during unit time $\Delta t$ is indicated by "$V\Delta t$", and the distance traveled by the cluster during unit time $\Delta t$ is indicated by "$W\Delta t$". Further, the angle formed by the moving direction of the ranging sensor 10 and the arrangement direction of the ranging points included in the cluster is indicated by "$\theta$", and the yaw angle of the cluster with respect to the ranging sensor 10 is indicated by "$\phi$". In addition, the distance from the ranging sensor 10 to the cluster (more precisely, the distance in a plane parallel to the road surface) is indicated by "r". The circle C1 and the circle C2 are circles with a radius r, the emission point of the ranging sensor 10 located at the center of the circle C1 is shown as being located at the center of the circle C2 after a unit time $\Delta t$ has elapsed.

"$W\Delta t$" is estimated by the sum of "$W_x\Delta t$" and "$W_y\Delta t$". Here, "$W_x\Delta t$" is the moving distance of the cluster caused by the distance "$V_x\Delta t$" that the ranging sensor 10 moves in a direction parallel to the curb LS during the unit time $\Delta t$. Moreover, "$W_y\Delta t$" is the moving distance of the cluster caused by the distance "$V_y\Delta t$" that the ranging sensor 10 travels in the direction perpendicular to the curb LS during the unit time $\Delta t$.

In Fig. 4B, the ranging sensor 10 is shown moving in a direction parallel to the curb LS. From the positional relationship between the circle C1 and the circle C2 shown in Fig. 4B, the following equation (2) is established between "$W_x\Delta t$" and "$V_x\Delta t$".

[Equation 2]

$$W_x \Delta t = V_x \Delta t = V \Delta t \cos \theta \quad (2)$$

In Fig. 4C, the ranging sensor 10 is shown moving in a direction perpendicular to the curb LS. In Fig. 4C, "$\alpha$" satisfies "$\alpha+\theta+\phi=\pi/2$". From the positional relationship between the circle C1 and the circle C2 shown in Fig. 4C, the following equation (3) is established between "$W_y\Delta t$" and "$V_y\Delta t$".

[Equation 3]

$$
\begin{aligned}
W_y \Delta t &= \sqrt{r^2 - (r \cos \alpha - V_y \Delta t)^2} - r \sin \alpha \\
&= \sqrt{r^2 \cos^2(\theta + \phi) + 2r \sin(\theta + \phi) \cdot V_y \Delta t - (V_y \Delta t)^2} - r \cos(\theta + \phi) \\
&= r \cos(\theta + \phi) \sqrt{1 + \frac{2r \sin(\theta + \phi) \cdot V_y \Delta t - (V_y \Delta t)^2}{r^2 \cos^2(\theta + \phi)}} - r \cos(\theta + \phi) \\
&= V \Delta t \sin \theta \tan(\theta + \phi)
\end{aligned}
\quad (3)
$$

Note that when formula (3) is derived, "$\alpha+\theta+\phi=\pi/2$" and the fact that "r" is sufficiently larger than "$V\Delta t$" are used.

Therefore, by dividing the sum of "$W_x\Delta t$" shown by equation (2) and "$W_y\Delta t$" shown by equation (3) by "$\Delta t$", "W" shown by equation (1) is obtained.

Therefore, it has been shown that the magnitude of the moving speed of the cluster consisting of the ranging points corresponding to the curb is expressed by the above equation (1). The expected moving speed is calculated based on equation (1) for the cluster actually acquired from the point cloud data, and if the expected moving speed is close to the actual moving speed, it can be determined that there is a high possibility that the cluster corresponds to the curb.

The determining unit 33 determines whether a condition indicating "curb-likeness" is satisfied for each cluster. Here, the following conditions can be cited as conditions that indicate "curb-likeness".

[A. Height Condition]

A height condition is set that the height of the ranging points included in the cluster from the road surface on which the vehicle is traveling is equal to or lower than a predetermined height at at least one of the first timing and the second timing. The curb on the road surface is often below a certain height. Therefore, a cluster that satisfies the height condition is likely to correspond to the curb.

[B. Arrangement Condition]

An arrangement condition is set that the positions of the ranging points included in the cluster projected onto the road surface are arranged along the moving direction of the cluster at at least one of the first timing and the second timing. The arrangement direction of the positions of the ranging points included in the cluster corresponding to the curb, projected onto the road surface, coincides with the moving direction of the cluster. Therefore, a cluster that satisfies the arrangement condition is likely to correspond to the curb.

[C. Deviation Condition]

A deviation condition is set that the difference between the first distance from the emission point to the cluster at the first timing and the second distance from the emission point to the cluster at the second timing is equal to or smaller than a predetermined value. The distance from the emission point to the clusters corresponding to the curbs does not vary significantly. Therefore, a cluster that satisfies the deviation condition is likely to correspond to the curb.

[D. Continuation Condition]

A continuation condition is set that the arrangement direction of the positions of the ranging points included in the cluster projected onto the road surface at the first timing is the same as the arrangement direction of the positions of the ranging points included in the cluster projected onto the road surface at the second timing. The arrangement direction of the ranging points included in the cluster corresponding to the curb does not vary significantly. Therefore, a cluster that satisfies the continuation condition is likely to correspond to the curb.

Note that a continuation condition may be set that the height of the ranging points included in the cluster at the first timing is the same as the height of the ranging points included in the cluster at the second timing. The height of the ranging points included in the cluster corresponding to the curb does not vary significantly. Therefore, a cluster that satisfies the continuation condition is likely to correspond to the curb.

[E. Speed Condition]

A speed condition is set that the difference between the moving speed estimated based on equation (1) for the cluster actually obtained from point cloud data and the actual moving speed of the cluster is equal to or less than a predetermined threshold (i.e., the two moving speeds are equal or have a small difference). As described above, the magnitude of the moving speed of the cluster corresponding to the curb can be evaluated using equation (1). Therefore, a cluster that satisfies the speed condition is likely to correspond to the curb.

[F. Other Condition]

If one or more of the conditions described above are satisfied at two or more timings, it can be said that there is a high possibility that the cluster is the curb. In particular, if one or more of the conditions described above are satisfied at different vehicle speeds after acceleration or deceleration of the vehicle, it is highly likely that the cluster is the curb.

Furthermore, if one or more of the conditions described above are satisfied for multiple clusters adjacent to the cluster of interest, there is a high possibility that the cluster of interest and the adjacent clusters are clusters corresponding to the same curb.

The determining unit 33 determines whether the above-described condition indicating "curb-likeness" is satisfied for each cluster. More specifically, the determining unit 33 determines whether all of the primary conditions consisting of the height condition, the arrangement condition, and the deviation condition are satisfied. If it is determined that all of the primary conditions are satisfied, the determining unit 33 recognizes the cluster as the curb on the road surface.

In addition, the determining unit 33 may recognize the cluster as the curb on the road surface when it is determined that the continuation condition is satisfied in addition to all of the primary conditions. Further, the determining unit 33 may recognize the cluster as the curb on the road surface when it is determined that the speed condition is satisfied in addition to all of the primary conditions. Furthermore, the determining unit 33 may recognize the cluster as the curb on the road surface when it is determined that other conditions are satisfied in addition to all of the primary conditions.

[Processing procedure of the information processing device]

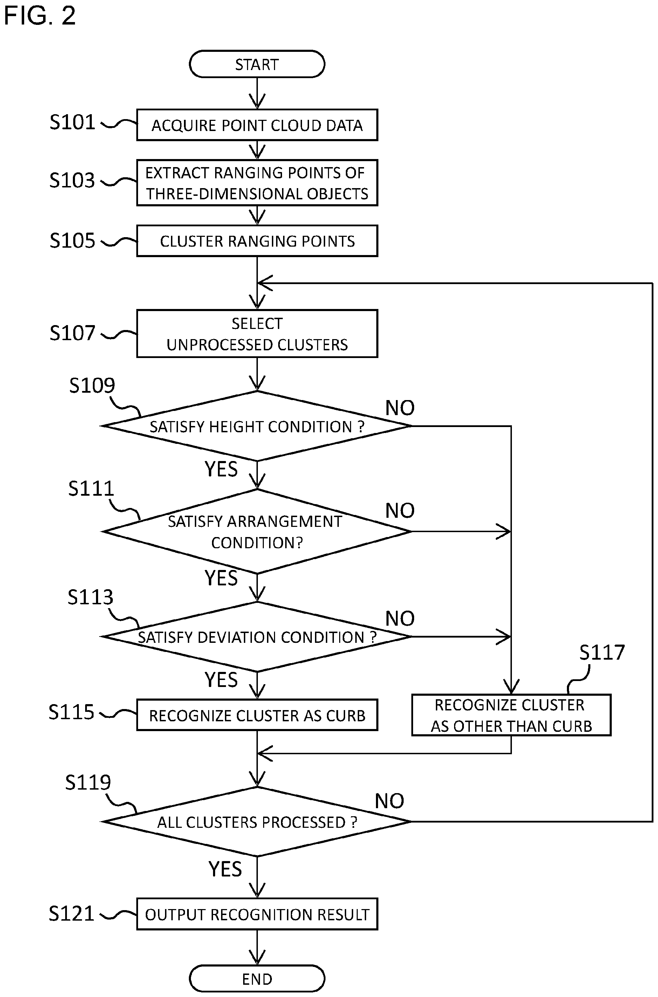

Next, the processing procedure of the information processing device 1 according to the present embodiment will be described with reference to the flowchart of Fig. 2. Fig. 2 is a flowchart illustrating a processing of the information processing device 1 according to this embodiment. The process of the information processing device 1 shown in Fig. 2 may be repeatedly executed at a predetermined cycle.

First, in step S101, the point cloud acquiring unit 21 acquires point cloud data from the ranging sensor 10.

In step S103, the ranging point extracting unit 23 extracts ranging points of three-dimensional objects existing around the vehicle, excluding ranging points on the road surface on which the vehicle travels, based on the point cloud data.

In step S105, the clustering unit 25 classifies (clusters) a plurality of ranging points regarding the three-dimensional objects into a plurality of clusters based on the distance between each point. In addition, the cluster tracking unit 27 acquires various types of information regarding clusters and ranging points included in the clusters.

In step S107, the determining unit 33 selects unprocessed clusters from among the clusters obtained by the clustering unit 25.

In steps S109, S111, and S113, the determining unit 33 determines for each cluster whether the condition indicating "curb-likeness" is satisfied.

For example, in step S109, the determining unit 33 determines whether the height condition is satisfied. In step S111, the determining unit 33 determines whether the arrangement condition is satisfied. In step S113, the determining unit 33 determines whether the deviation condition is satisfied. The determining unit 33 may determine whether the continuation condition, the speed condition, or other conditions are satisfied.

If it is determined in steps S109, S111, and S113 that the condition indicating "curb-likeness" is not satisfied (NO in any of steps S109, S111, and S113), in step S117, the determining unit 33 recognizes the selected cluster as a cluster corresponding to something other than the curb.

On the other hand, if it is determined in steps S109, S111, and S113 that the condition indicating "curb-likeness" is satisfied (YES in all of steps S109, S111, and S113), in step S115, the determining unit 33 recognizes the selected cluster as a cluster corresponding to the curb.

In step S119, it is determined whether the determining unit 33 has completed the determination processing for all clusters. If it is determined that all clusters have not been processed (NO in step S119), the process returns to step S107.

On the other hand, if it is determined that all clusters have been processed (YES in step S119), the recognition result by the determining unit 33 is output from the input/output unit of the controller 20 in step S121. After that, the flowchart of Fig. 2 ends.

[Effect of Embodiments]

As explained in detail above, an information processing method and an information processing device, according to the present embodiment, generate a cluster made up of the ranging point that are within a predetermined distance from each other, based on a point cloud data generated by emitting electromagnetic waves from an emission point within a predetermined range around a vehicle and detecting a position of reflection point, which is a ranging point, based on reflected waves, detect a moving direction of the ranging point included in the cluster from a first timing to a second timing, set a height condition that a height of the ranging point included in the cluster from a road surface on which the vehicle is traveling is equal to or lower than a predetermined height at at least one of the first timing and the second timing, set an arrangement condition that the position of the ranging point included in the cluster projected onto the road surface are arranged along the moving direction at at least one of the first timing and the second timing, set a deviation condition that a difference between a first distance from the emission point to the cluster at the first timing and a second distance from the emission point to the cluster at the second timing is equal to or smaller than a predetermined value, determine whether all of primary conditions including the height condition, the arrangement condition, and the deviation condition, are satisfied, and recognize the cluster as a curb on the road surface, in a case of determining that all of the primary conditions are satisfied.

As a result, it is possible to reduce the possibility of misidentifying stationary structures such as curbs for moving objects even if the density of ranging points around the vehicle obtained by scanning using a sensor is not sufficient. In particular, since it is determined whether the cluster is the curb, based on the height of the ranging points that make up the cluster, the similarity between the moving direction of the cluster and the arrangement direction of the ranging points within the cluster, and the temporal change in the distance from the emission point of the sensor, it is possible to reduce the possibility that the curb is mistakenly detected as the moving object.

Further, the information processing method and the information processing device, according to the present embodiment, may recognize the cluster as the curb on the road surface, in a case of determining that all of the primary conditions are satisfied and an arrangement direction of the position at the first timing is the same as an arrangement direction of the position at the second timing. The arrangement direction of the ranging points included in the cluster corresponding to the curb does not change over time if it is at the same point, and changes slowly in space. Therefore, by adding the arrangement condition to the determination, it is possible to reduce the possibility that the moving object is mistakenly determined to be the curb.

Furthermore, the information processing method and the information processing device, according to the present embodiment, may recognize the cluster as the curb on the road surface, in a case of determining that all of the primary conditions are satisfied and a height of the ranging point included in the cluster at the first timing is same as a height of the ranging point included in the cluster at the second timing. The height of a cluster corresponding to the curb does not change over time if it is at the same point, and changes slowly in space. Therefore, by adding this condition to the determination, it is possible to reduce the possibility that the moving object is mistakenly determined to be the curb.

Further, the information processing method and the information processing device, according to the present embodiment, may recognizing the cluster as the curb on the road surface, in a case of determining that all of the primary conditions are satisfied, and a following equation is satisfied,

[Equation 4]

$$W = V \cos\theta + V \sin\theta \tan(\theta + \phi)$$

where V is a magnitude of a moving speed of the sensor, $\theta$ is an angle between a direction in which the sensor moves and an arrangement direction of the position, $\phi$ is an azimuth angle of the cluster relative to the sensor, and W is a magnitude of the moving speed of the cluster. The magnitude of the moving speed of the cluster corresponding to the curb is determined by the above equation from the moving speed of the sensor, the angle of the curb with respect to the moving direction of the sensor, and the azimuth angle of the ranging points included in the cluster. Therefore, by adding the speed condition to the determination, it is possible to reduce the possibility that the moving object is mistakenly determined to be the curb.

Furthermore, the information processing method and the information processing device, according to the present embodiment, may recognize the cluster as the curb on the road surface, in a case of determining that all of the primary conditions are satisfied and determining that all of the primary conditions are satisfied after the vehicle accelerates or decelerates. If the magnitude of the moving speed of the cluster satisfies the above-mentioned condition at multiple points in time when the speed of the vehicle is different, there is a high possibility that the cluster corresponds to the curb. Therefore, by determining the above-mentioned conditions even after acceleration or deceleration of the vehicle, it is possible to reduce the possibility that the moving object is mistakenly determined to be the curb.

Further, the information processing method and the information processing device, according to the present embodiment, may recognize two or more clusters as the curb on the road surface, in a case of determining that all of the primary conditions are satisfied for the clusters. In the case of spatially continuous curb, the above-mentioned conditions are likely to be satisfied in multiple clusters. Therefore, by determining that the above-mentioned condition is satisfied in a plurality of clusters, it is possible to reduce the possibility that the moving object is mistakenly determined to be the curb.

Respective functions described in the above embodiment may be implemented by one or plural processing circuits. The processing circuits include programmed processors, electrical circuits, etc., as well as devices such as application specific integrated circuits (ASIC) and circuit components arranged to perform the described functions, etc.

Although the contents of the present invention have been described above with reference to the embodiment, the present invention is not limited to these descriptions, and it will be apparent to those skilled in the art that various modifications and improvements can be made. It should not be construed that the present invention is limited to the descriptions and the drawings that constitute a part of the present disclosure. On the basis of the present disclosure, various alternative embodiments, practical examples, and operating techniques will be apparent to those skilled in the art.

It is needless to mention that the present invention also includes various embodiments that are not described herein. Therefore, the technical scope of the present invention is to be defined only by the invention specifying matters according to the scope of claims appropriately obtained from the above descriptions.

REFERENCE SIGNS LIST

1 information processing device
10 ranging sensor
20 controller
21 point cloud acquiring unit
23 ranging point extracting unit
25 clustering unit
27 cluster tracking unit
29 speed calculating unit
31 vehicle information acquiring unit
33 determining unit

**Claims**

1. An information processing method for

   an information processing device including a sensor configured to emit electromagnetic waves from an emission point to a predetermined range around a vehicle, to detect a position of reflection point, which is a ranging point, based on reflected waves, and to generate point cloud data relating to the ranging point, and a controller configured to process data acquired from the sensor,
   comprising:

   by using the controller,
   generating a cluster made up of the ranging point that are within a predetermined distance from each other, based on the point cloud data,
   detecting a moving direction of the ranging point included in the cluster from a first timing to a second timing,
   setting a height condition that a height of the ranging point included in the cluster from a road surface on which the vehicle is traveling is equal to or lower than a predetermined height at at least one of the first timing and the second timing,

setting an arrangement condition that the position of the ranging point included in the cluster projected onto the road surface are arranged along the moving direction at at least one of the first timing and the second timing,

setting a deviation condition that a difference between a first distance from the emission point to the cluster at the first timing and a second distance from the emission point to the cluster at the second timing is equal to or smaller than a predetermined value,

determining whether all of primary conditions including the height condition, the arrangement condition, and the deviation condition, are satisfied, and

recognizing the cluster as a curb on the road surface, in a case of determining that all of the primary conditions are satisfied.

2. The information processing method according to claim 1, further comprising:
by using the controller, recognizing the cluster as the curb on the road surface, in a case of determining that

all of the primary conditions are satisfied and
an arrangement direction of the position at the first timing is the same as an arrangement direction of the position at the second timing.

3. The information processing method according to claim 1 or 2, further comprising:
by using the controller, recognizing the cluster as the curb on the road surface, in a case of determining that

all of the primary conditions are satisfied and
a height of the ranging point included in the cluster at the first timing is same as a height of the ranging point included in the cluster at the second timing.

4. The information processing method according to any one of claims 1 to 3, further comprising:
by using the controller, recognizing the cluster as the curb on the road surface, in a case of determining that

all of the primary conditions are satisfied, and
a following equation is satisfied

[Equation 1]

$$W = V \cos\theta + V \sin\theta \tan(\theta + \phi)$$

where

V is a magnitude of a moving speed of the sensor,
$\theta$ is an angle between a direction in which the sensor moves and an arrangement direction of the position,
$\phi$ is an azimuth angle of the cluster relative to the sensor, and
W is a magnitude of the moving speed of the cluster.

5. The information processing method according to any one of claims 1 to 4, further comprising:
recognizing the cluster as the curb on the road surface, in a case of
determining that all of the primary conditions are satisfied and determining that all of the primary conditions are satisfied after the vehicle accelerates or decelerates.

6. The information processing method according to any one of claims 1 to 5, further comprising:
recognizing two or more clusters as the curb on the road surface, in a case of determining that all of the primary conditions are satisfied for the clusters.

7. An information processing device comprising

a sensor configured to emit electromagnetic waves from an emission point to a predetermined range around a vehicle, to detect a position of reflection point, which is a ranging point, based on reflected waves, and to generate point cloud data relating to the ranging point, and

a controller configured to process data acquired from the sensor,

wherein the controller is configured to

generate a cluster made up of the ranging point that are within a predetermined distance from each other, based on the point cloud data,

detect a moving direction of the ranging point included in the cluster from a first timing to a second timing,

set a height condition that a height of the ranging point included in the cluster from a road surface on which the vehicle is traveling is equal to or lower than a predetermined height at at least one of the first timing and the second timing,

set an arrangement condition that the position of the ranging point included in the cluster projected onto the road surface are arranged along the moving direction at at least one of the first timing and the second timing,

set a deviation condition that a difference between a first distance from the emission point to the cluster at the first timing and a second distance from the emission point to the cluster at the second timing is equal to or smaller than a predetermined value,

determine whether all of primary conditions including the height condition, the arrangement condition, and the deviation condition, are satisfied, and

recognize the cluster as a curb on the road surface, in a case of determining that all of the primary conditions are satisfied.

FIG. 1

FIG. 2

START

S101 — ACQUIRE POINT CLOUD DATA

S103 — EXTRACT RANGING POINTS OF THREE-DIMENSIONAL OBJECTS

S105 — CLUSTER RANGING POINTS

S107 — SELECT UNPROCESSED CLUSTERS

S109 SATISFY HEIGHT CONDITION ?
NO
YES

S111 SATISFY ARRANGEMENT CONDITION?
NO
YES

S113 SATISFY DEVIATION CONDITION ?
NO
YES

S115 — RECOGNIZE CLUSTER AS CURB

S117 RECOGNIZE CLUSTER AS OTHER THAN CURB

S119 ALL CLUSTERS PROCESSED ?
NO
YES

S121 — OUTPUT RECOGNITION RESULT

END

FIG. 3A

FIG. 3B

FIG. 4A

FIG. 4B

FIG. 4C

## INTERNATIONAL SEARCH REPORT

| International application No. |
| --- |
| **PCT/IB2022/000194** |

| A. | CLASSIFICATION OF SUBJECT MATTER |
| --- | --- |

*B60W 40/06*(2012.01)i
FI:   B60W40/06

According to International Patent Classification (IPC) or to both national classification and IPC

| B. | FIELDS SEARCHED |
| --- | --- |

Minimum documentation searched (classification system followed by classification symbols)

B60W10/00-10/30; B60W30/00-60/00; G08G 1/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2018-48949 A (TOYOTA MOTOR CORP.) 29 March 2018 (2018-03-29) <br> paragraphs [0013]-[0030], fig. 1-7 | 1-7 |
| A | JP 2012-145444 A (TOYOTA MOTOR CORP.) 02 August 2012 (2012-08-02) <br> paragraphs [0016]-[0029], fig. 1-2 | 1-7 |
| A | JP 2019-168417 A (DENSO CORP.) 03 October 2019 (2019-10-03) <br> paragraphs [0016]-[0055], fig. 1-8 | 1-7 |
| A | WO 2017/037753 A1 (NISSAN MOTOR CO., LTD.) 03 September 2017 (2017-09-03) <br> paragraphs [0009]-[0016], fig. 1-4 | 1-7 |

☐ Further documents are listed in the continuation of Box C.          ☑ See patent family annex.

| | |
| --- | --- |
| *    Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **11 July 2022** | **02 August 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/IB2022/000194**

| Patent document cited in search report | | | Publication date (day/month/year) | Patent family member(s) | Publication date (day/month/year) |
|---|---|---|---|---|---|
| JP | 2018-48949 | A | 29 March 2018 | (Family: none) | |
| JP | 2012-145444 | A | 02 August 2012 | (Family: none) | |
| JP | 2019-168417 | A | 03 October 2019 | (Family: none) | |
| WO | 2017/037753 | A1 | 03 September 2017 | US 2019/0033082 A1 paragraphs [0025]-[0037], fig. 1-4 EP 3343174 A1 CA 2997046 A1 CN 107923758 A KR 10-2018-0041741 A MX 2018002267 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006160116 A